# EUROPÄISCHE PATENTSCHRIFT

(11) **EP 3 218 946 B1**
(45) Veröffentlichungstag und Bekanntmachung des Hinweises auf die Patenterteilung: **11.12.2019**
(21) Anmeldenummer: 15781675.2
(22) Anmeldetag: 19.10.2015
(51) Int. Cl.: H01M 2/10, H01M 10/647, H01M 10/6556, H01M 10/625

(54) **AUFNAHME FÜR EIN BATTERIEMODUL UND BATTERIEMODUL AUFWEISEND EINE DERARTIGE AUFNAHME**
RECEPTACLE FOR A BATTERY MODULE AND BATTERY MODULE HAVING SUCH A RECEPTACLE
LOGEMENT DESTINÉ À UN MODULE DE BATTERIE ET MODULE COMPRENANT UN TEL LOGEMENT

(30) Priorität: 12.11.2014 DE 102014223047
(43) Veröffentlichungstag der Anmeldung: 20.09.2017
(73) Patentinhaber: Robert Bosch GmbH, 70442 Stuttgart (DE)
(72) Erfinder: KOHLBERGER, Markus, 70174 Stuttgart (DE); SCHUETZ, Jonas, 70372 Stuttgart-Bad Cannstatt (DE); LANGE, Ulrich, 72631 Aichtal (DE); JOERG, Nicolai, 70376 Stuttgart (DE); KRASNIQI, Kushtrim, 70439 Stuttgart (DE); SCHWEINBENZ, Jochen, 70469 Stuttgart (DE); PACZKOWSKI, Lukasz, 70372 Stuttgart (DE); REIMER, Eduard, 70374 Stuttgart (DE); LIEPOLD, Dirk, 70184 Stuttgart (DE); LICA, Ionut Marian, 71701 Schwieberdingen (DE); BENZ, Steffen, 70197 Stuttgart (DE)
(86) Internationale Anmeldenummer: PCT/EP2015/074168
(87) Internationale Veröffentlichungsnummer: WO 2016/074885

(56) Entgegenhaltungen:
- EP-A1- 3 178 123
- JP-A- 2014 044 884
- US-A1- 2011 183 179
- US-A1- 2013 183 571
- US-A1- 2013 330 587

## Beschreibung

Die vorliegende Erfindung betrifft eine Aufnahme für ein Batteriemodul, insbesondere zum Fixieren und gegebenenfalls Verpressen wenigstens einer Batteriezelle. Die vorliegende Erfindung betrifft ferner ein Batteriemodul aufweisend eine derartige Aufnahme, wobei in der Aufnahme wenigstens eine Batteriezelle angeordnet ist.

### Stand der Technik

Elektrochemische Energiespeicher, wie beispielsweise Lithium-Ionen-Batterien, sind in vielen täglichen Anwendungen weit verbreitet. Sie werden beispielsweise in Computern, wie etwa Laptops, Mobiltelefonen, Smartphones und bei anderen Anwendungen eingesetzt. Auch bei der zur Zeit stark vorangetriebenen Elektrifizierung von Fahrzeugen, wie etwa Kraftfahrzeugen, etwa bei elektrischen Fahrzeugen oder Hybridfahrzeugen, bieten derartige Batterien Vorteile.

Lithium-Ionen-Batterien, beispielsweise, etwa für den automobilen Einsatzbereich, umfassen oftmals eine Mehrzahl von einzelnen Batteriezellen. Diese Zellen werden, um das Spannungs- oder Stromniveau zu erhöhen, parallel oder in Reihe miteinander verschaltet und mechanisch zu Modulen zusammengeschlossen. Die Zellen umfassen dabei oftmals ein metallisches Gehäuse, in welchem sich die Zelleinheit, beispielsweise umfassend gewickelt ausgestaltete Elektroden, befinden.

Die in den Gehäusen angeordneten Zelleinheiten können oftmals bei einer Temperaturerhöhung beziehungsweise bedingt durch einen Ladebeziehungsweise Entladevorgang aufschwellen beziehungsweise sich ausdehnen. Dadurch wird der innere Widerstand der Zelle größer und deren Leistung sinkt. Deshalb ist es bekannt, auf das Modul mithilfe eines Spannbandes von außen eine Kraft einzubringen, um so die Zellen zusammen zu pressen und das Anschwellen zu verhindern. Alternativ ist es bekannt, dass die Batteriezellen von einem Rahmen umgeben sind, der einer Zellausdehnung entgegenwirkt. Derartige Rahmen bestehen oftmals aus verschweißten Bauteilen oder weisen ebenfalls Spannbänder auf.

Aus dem Dokument DE 10 2010 046 529 A1 ist ein viereckiges Rahmensystem zur Aufnahme wenigstens einer Batteriezelle bekannt. Ein derartiges Rahmensystem weist zwei Druckplatten sowie zwei Seitenteile auf, wobei die beiden Seitenteile an den beiden Druckplatten fixiert sind.

Aus dem Dokument DE10 2014 216 407 A1 ist ferner eine Aufnahme zum zumindest teilweise verpressenden Aufnehmen wenigstens einer Batteriezelle für ein Batteriemodul bekannt, wobei die Aufnahme zwei Endplatten aufweist, die an zwei gegenüberliegenden Seiten der wenigstens einen Batteriezelle anordbar sind, wobei die Endplatten durch eine Mehrzahl an den Endplatten fixierter stabartiger Abstützungen verbunden sind, und wobei die Abstützungen zum wenigstens zweidimensionalen Abstützen jeweils einer Kante der wenigstens einen Batteriezelle ausgestaltet sind.

Aus dem Dokument US 2013/0183571 A1 ist eine Aufnahme bekannt, wobei einteilig ausgebildete Verbindungselemente benutzt werden.

### Offenbarung der Erfindung

Die vorliegende Erfindung betrifft eine Aufnahme zum zumindest teilweise verpressenden Aufnehmen wenigstens einer Batteriezelle für ein Batteriemodul, wobei die Aufnahme wenigstens zwei Endplatten aufweist, die an zwei gegenüberliegenden Seiten der wenigstens einen Batteriezelle anordbar sind. Dabei ist es vorgesehen, dass die Endplatten durch eine Mehrzahl an den Endplatten fixierte jeweils wenigstens zwei Steckelemente aufweisende Verbindungsmittel derart verbunden sind, dass die Steckelemente der Verbindungsmittel zum Fixieren der Verbindungsmittel an den Endplatten in in einer im Wesentlichen rechtwinklig zu der Erstreckungsrichtung der Verbindungsmittel angeordneten Ebene verlaufende Buchsen der Endplatten eingreifen.

Eine derartige Lösung erlaubt insbesondere, eine leichte und kostengünstige Aufnahme zum Ausbilden eines Batteriemoduls zu schaffen, durch welche eine Verschlechterung der Leistung des Batteriemoduls durch ein Ausdehnen beziehungsweise Aufschwellen der Batteriezelle oder der Batteriezellen verhindert werden kann.

Die vorbeschriebene Aufnahme dient somit insbesondere dem zumindest teilweise verpressenden Aufnehmen wenigstens einer Batteriezelle. Insbesondere kann die Aufnahme dazu dienen, eine Mehrzahl an Batteriezellen aufzunehmen, welche durch eine entsprechende Verschaltung untereinander, insbesondere zusammen mit der Aufnahme, ein Batteriemodul ausbilden. Unter einem Aufnehmen der Batteriezelle oder der Batteriezellen ist somit zu verstehen, dass die Batteriezelle beziehungsweise die Batteriezellen in der Aufnahme angeordnet sind beziehungsweise zumindest teilweise von der Aufnahme umgeben sind. Ferner ist unter einem zumindest teilweise verpressenden Aufnehmen zu verstehen, dass die wenigstens eine Batteriezelle nicht permanent verpresst werden braucht sondern nur in einem bestimmten Betriebszustand der Batteriezelle, wie etwa bei einem Betriebszustand, bei dem eine Ausdehnung der wenigstens einen Batteriezelle stattfindet. Somit kann ein teilweises Verpressen etwa ein temporäres Verpressen bedeuten.

Die Aufnahme weist zwei Endplatten auf, die an zwei gegenüberliegenden Seiten der wenigstens einen Batteriezelle anordbar sind. Somit kann eine Batteriezelle zwischen den Endplatten angeordnet sein, oder es kann eine Mehrzahl an Batteriezellen zwischen den Endplatten angeordnet sein, ohne dass jede Batteriezelle in unmittelbarem Kontakt mit einer oder mit beiden Endplatten stehen braucht. Dabei können die Endplatten bei dem Vorliegen einer Mehrzahl an Batteriezellen insbesondere derart angeordnet sein, dass sie jeweils an dem Ende einer Anordnung beziehungsweise eines Stapels der Batteriezellen vorliegen und etwa mit den entsprechenden äußeren Batteriezellen in Kontakt sind. Somit kann dann vor der ersten und hinter der letzten Batteriezelle jeweils eine Endplatte angeordnet sein. Die Endplatten können dabei derart ausgestaltet beziehungsweise dimensioniert sein, dass sie die gesamte Batteriezelle beziehungsweise die gesamte an der Endplatte anliegende Seite der Batteriezelle abstützen können.

Somit können die Endplatten insbesondere die Aufgabe einer Druckplatte wahrnehmen, um so ein zumindest teilweises beziehungsweise temporäres Verspannen der wenigstens einen Batteriezelle zu ermöglichen. Ein derartiges Verspannen kann dabei insbesondere dazu dienen, einem beispielsweise temperaturbedingten Anschwellen der Batteriezellen, wodurch der innere Widerstand der Zelle vergrößert wird beziehungsweise deren Leistung sinkt, entgegenzuwirken. Ein Anschwellen kann dabei beispielsweise durch ein Verdampfen oder durch ein Zersetzen von in der Zelle enthaltenem Elektrolyten hervorgerufen werden, oder auch durch Lade- beziehungsweise Entladevorgänge.

Bei einer vorbeschriebenen Aufnahme ist es weiterhin vorgesehen, dass die Endplatten durch eine Mehrzahl an den Endplatten fixierte Verbindungsmittel verbunden sind. In anderen Worten umfasst die Aufnahme eine Mehrzahl an Verbindungsmitteln, welche an den Endplatten fixiert sind und diese somit verbinden. Dadurch kann die Aufnahme eine stabile und selbsttragende Struktur ausbilden, was eine Spannkraft auf die Batteriezellen ausüben kann.

Die Verbindungsmittel sind dabei beispielsweise aber nicht beschränkend stabartig ausgestaltet, was im Sinne der vorliegenden Erfindung insbesondere bedeuten soll, dass die Verbindungsmittel im Vergleich zu ihrer zwischen den Endplatten verlaufender Länge eine geringere und damit nur eine begrenzte Breite aufweisen und somit die einzelnen Verbindungsmittel von einander beabstandet sind. Insbesondere ist unter einer stabartigen Abstützung zu verstehen, dass diese nur in einem begrenzten Bereich der Aufnahme vorliegt und etwa keine gesamte Seitenfläche ausbildet, sondern beispielsweise nur in einem Eckbereich der Aufnahme vorliegt.

Dadurch, dass die Verbindungsmittel stabartig ausgestaltet sind, kann eine sehr stabile Verbindung mit einer besonders leichten Verbindung vereint werden. Denn durch die nur begrenzte räumliche Ausdehnung weisen die Verbindungsmittel nur einen begrenzten Materialbedarf auf, so dass Gewicht eingespart werden kann. Dies ist insbesondere für mobile Anwendungen von Vorteil, etwa bei der Verwendung in einem zumindest teilweise elektrisch angetriebenen Fahrzeug.

Darüber hinaus kann durch eine Materialeinsparung und ferner eine gegenüber Lösungen aus dem Stand der Technik erzielte Verringerung beziehungsweise Vereinfachung von Bauteilen eine besonders kostengünstige Ausgestaltung möglich sein.

Eine stabartige Ausgestaltung ist jedoch nicht zwingend, so dass auch nicht stabartige Ausgestaltungen vom Rahmen der Erfindung umfasst sind.

Ferner kann eine besonders gute Stabilität ermöglicht werden, da von außen auf die Aufnahme wirkende Krafteinflüsse über ein von der Aufnahme gebildetes Gerüst von insbesondere starr verbundenen Teilen gut abgeleitet werden können.

Mit Bezug auf die Fixierung der Verbindungsmittel an den Endplatten weisen die Endplatten jeweils wenigstens zwei in einer im Wesentlichen rechtwinklig zu der Erstreckungsrichtung der Verbindungsmittel angeordneten Ebene verlaufende Buchsen auf. Beispielsweise können die Buchsen in einer von einem Kopfbereich zu einem Bodenbereich der Endplatten angeordneten Richtung verlaufen. Die Erstreckungsrichtung der Verbindungsmittel soll dabei insbesondere ihre Länge und damit die Richtung von einer Endplatte zu der weiteren Endplatte meinen.

Diese Buchsen sind somit insbesondere im Inneren der Endplatten angeordnet oder an diesen befestigt und können eine stabile und platzsparende Befestigung der Verbindungsmittel sicherstellen. Um dies zu realisieren, weisen die Verbindungsmittel jeweils wenigstens zwei Steckelemente auf derart, dass die Steckelemente zum Fixieren der Verbindungsmittel an den Endplatten in die Buchsen eingreifen.

Unter einem Steckelement kann dabei ein derartiges Element verstanden werden, welches in die Buchse eingesteckt werden kann und das Verbindungsmittel so fixieren kann. Dabei ist es beispielsweise vorgesehen, dass die Steckelemente als Teil der stabartigen Verbindungsmittel ausgestaltet sind. Erfindungsgemäß sind die Steckelemente einteilig mit den Verbindungselementen ausgestaltet. Dadurch kann die Herstellung besonders einfach sein. Da die Steckelement in die Buchsen eingreifen, verlaufen auch die Steckelemente in einer im Wesentlichen rechtwinklig zu der Erstreckungsrichtung der Verbindungsmittel angeordneten Ebene, wobei die exakte Ausrichtung der Steckelemente und der Buchsen aneinander angepasst sein können.

Die Verbindungsmittel verlaufen in einem fertiggestellten Modul etwa in einer Richtung, die von der Oberseite der Batteriezellen zu deren Unterseite verläuft. Dabei soll eine zu einer Erstreckungsrichtung der Verbindungsmittel im Wesentlichen rechtwinklige Ausrichtung bedeuten einen exakten rechten Winkel oder einen Winkel, der von einem rechten Winkel eine Abweichung von +/- 30°, insbesondere +/- 15°, beispielsweise +/- 5°, aufweisen kann. In dieser Ausgestaltung kann eine besonders stabile Fixierung von Endplatten und Abstützungen realisiert werden, wobei eine sichere Fixierung alleine durch das Einstecken der Steckelemente und ohne das zwingende Vorsehen weiterer Fixierungselemente realisiert werden, wobei letzteres im Rahmen der Erfindung jedoch nicht ausgeschlossen ist.

Somit kann die Aufnahme bei dem Vorliegen der Endplatten und der Verbindungsmittel auf einfache Weise durch bloßes in einander stecken hergestellt werden. Ein Montageprozess wie auch ein Demontageprozess der Aufnahme kann daher besonders einfach und zeitarm ablaufen, so dass die Herstellung und auch Service-Arbeiten besonders einfach ablaufen können.

Ferner können derartige Verbindungsmittel einfach und kostengünstig herstellbar sein, do dass die Aufnahme vergleichsweise kostengünstig sein kann. Durch die Anordnung der Buchsen kann die Anordnung ferner besonders stabil sein, da von außen eingetragene Kräfte sicher aufgenommen werden können.

Dabei kann es beispielsweise vorgesehen sein, dass die Verbindungsmittel beispielsweise parallel zu ihrer Erstreckungsrichtung winkelig ausgestaltet sind beziehungsweise parallel zu ihrer Erstreckungsrichtung einen Winkel aufweisen, um so zum wenigstens zweidimensionalen Abstützen jeweils einer Kante der wenigstens einen Batteriezelle ausgestaltet zu sein. In anderen Worten können die Verbindungsmittel derart ausgestaltet, dass die Kanten einer Batteriezelle, insbesondere bei plattenförmigen Batteriezellen, in zwei Dimensionen beziehungsweise in zwei Ebenen abgestützt werden. Dabei sind die abzustützenden Dimensionen beziehungsweise Ebenen insbesondere in einem rechten Winkel zu der durch die Endplatten vorgesehenen Abstützung angeordnet. Somit kann in einem Zusammenwirken der Verbindungsmittel und der Endplatten gemeinsam eine dreidimensionale und damit vollständige Abstützung der Batteriezellen ermöglicht werden.

Dadurch wird die Batteriezelle oder werden die Batteriezellen sicher in allen Raumrichtungen fixiert. Somit kann es verhindert werden, dass eine definierte Vorspannung bereits in einem Normalzustand der Batteriezellen, also in einem Zustand ohne Ausdehnung, vorliegen braucht. Dies erlaubt ein Schonen der Batteriezellen und dadurch eine besonders vorteilhafte Langlebigkeit der Batteriezellen und damit des Batteriemoduls. In anderen Worten kann der Nachteil der Lösungen aus dem Stand der Technik umgangen werden, wonach der Modulboden oftmals offen gestaltet war und sich dadurch ohne eine Vorspannung Batteriezellen aus dem Verbund lösen konnten. Es wird jedoch darauf hingewiesen, dass das Vorsehen einer Vorspannung auch in einem Normalzustand im Rahmen der vorliegenden Erfindung zwar nicht notwendig, aber auch nicht ausgeschlossen ist.

Dabei ist jedoch eine stabartige Ausgestaltung der Abstützungen nicht von Nachteil, da die Batteriezellen eine ladezustandsabhängige oder temperaturabhängige Ausbauchung oftmals nur in der Dimension der Abstützung der Endplatten widerfahren. Somit kann eine vollflächige Abstützung zur Vermeidung beziehungsweise für ein Entgegenwirken einer Ausdehnung der Batteriezellen durch die Endplatten ausreichend sein.

Weiterhin ist die vorbeschriebene Aufnahme grundsätzlich für verschiedenste Ausgestaltungen von Batteriezellen geeignet. So können beispielsweise bauchige beziehungsweise konvexe Zellen, wie auch konkave Zellen Verwendung finden, wobei für sämtliche Zellen eine Mindestverpresskraft grundsätzlich nicht notwendig ist.

Ferner kann eine derartige Aufnahme, etwa durch das Verwenden von beispielsweise genormten standardmäßig erhältlichen Profilen, die form- oder stoffschlüssig mit den Endplatten, beispielsweise unter Zuhilfenahme von nachfolgend beschriebenen Buchsen, verbunden werden können, hergestellt werden. Auf ein Laserschweißen kann dabei verzichtet werden, welches aufwändig und durch vergleichsweise große Toleranzketten recht komplex sein kann.

Zusammenfassend erlaubt es eine vorstehend beschriebene Aufnahme auf besonders einfache und kostengünstige Weise, Batteriezellen in einem Batteriemodul zu fixieren und durch eine zumindest temporäre Verspannung die Leistungsfähigkeit eines Batteriemoduls temperaturunabhängig aufrechtzuerhalten.

Erfindungsgemäß durchlaufen die Buchsen die Endplatten vollständig. Dadurch kann eine hohe Stabilität vereint werden mit einer hohen Variabilität. Denn in dieser Ausgestaltung können die Steckelemente die Endplatten ebenfalls vollständig durchlaufen oder zumindest zu einem großen Teil, was die Stabilität der Anbindung signifikant erhöhen kann. Darüber hinaus können die Steckelemente das Fixieren einer Mehrzahl von übereinander angeordneten Endplatten ermöglichen, wenn die Buchsen der Endplatten fluchtend angeordnet sind und die Steckelemente eine ausreichende Länge aufweisen.

Insbesondere mit Bezug auf eine hohe Variabilität kann es vorgesehen sein, dass wenigstens vier paarweise angeordnete Endplatten vorgesehen sind, von denen jeweils zwei mit fluchtend angeordneten Buchsen übereinander positioniert sind. In dieser Ausgestaltung kann es, wie dies vorstehend erläutert ist, vorteilhaft sein, wenn die Steckelemente eine ausreichende Länge aufweisen, um in mehreren Buchsen positioniert zu sein, da so eine einfache Fixierung mehrerer Endplatten durch eine vergleichsweise geringe Anzahl an Verbindungsmitteln möglich ist. Vier paarweise angeordnete Endplatten können dabei insbesondere bedeuten, dass jeweils zwei Endplatten paarweise und damit derart angeordnet sind, um wenigstens eine Batteriezelle als Paar von Endplatten zwischen sich zu verpressen. Somit können in dieser Ausgestaltung zwei Module von Batteriezellen übereinander angeordnet werden.

Im Rahmen einer weiteren Ausgestaltung können wenigstens vier paarweise angeordnete Endplatten vorgesehen sein, von denen jeweils zwei mit parallel angeordneten Buchsen nebeneinander positioniert sind. Auch in dieser Ausgestaltung kann eine hohe Variabilität ermöglicht werden und können ferner eine Vielzahl an Batteriezellen, beziehungsweise eine Mehrzahl an Modulen, wie insbesondere wenigstens zwei nebeneinander angeordnete Module, auf stabile und kostengünstige Weise angeordnet werden.

Im Rahmen einer weiteren Ausgestaltung kann es ferner vorgesehen sein, dass die Buchsen aus einem metallischen Material, also aus einem Material, welches ein Metall oder eine Metalllegierung aufweist, wie etwa aus Stahl, geformt sind. Diese Ausgestaltung kann insbesondere dann von Vorteil sein, wenn die Endplatten aus einem Kunststoff geformt sind. Durch die Ausgestaltung der Buchse aus metallischen Material kann eine Krafteinwirkung auf das Material der Endplatten selbst reduziert werden, wodurch eine Beschädigung der Endplatten auch bei einer vergleichsweise großen Krafteinwirkung verhindert oder zumindest signifikant reduziert werden kann. Eine Ausgestaltung der Endplatten aus einem Kunststoff, wie beispielsweise PTFE, kann eine besonders gewichtsreduzierte Ausgestaltung ermöglichen, was insbesondere bei mobilen Anwendungen von Vorteil sein kann. Darüber hinaus kann auch durch Kunststoffplatten eine ausreichende Stabilität ausgebildet werden, so dass ein sicheres Verspannen beziehungsweise Fixieren der Batteriezellen möglich ist. Im Rahmen einer weiteren Ausgestaltung können die Endplatten zumindest teilweise eine bienenwabenartige Struktur aufweisen. Insbesondere durch das Vorsehen einer bienenwabenartigen Struktur können die Endplatten ein besonders geringes Gewicht und dabei dennoch eine große Stabilität aufweisen. Dabei kann unter einer bienenwabenartigen Struktur insbesondere verstanden werden eine Struktur, welche zu einander unmittelbar benachbarte Ausnehmungen in insbesondere hexagonaler Form aufweist. Dabei sind die hexagonalen Ausnehmungen beispielsweise durch Rahmen begrenzt, welche, mit Ausnahme der äußeren Rahmen, jeweils zu wenigstens zwei hexagonalen Ausnehmungen zuzuordnen sind. Dabei können derartige Strukturen insbesondere vorgesehen sein an einer Oberfläche, welche dazu vorgesehen ist an der der Batteriezelle entgegengesetzten Seite angeordnet zu werden.

Im Rahmen einer weiteren Ausgestaltung können die Verbindungsmittel aus einem metallischen Material, also aus einem Material, welches ein Metall oder eine Metalllegierung aufweist, geformt sein. Beispielsweise können die Verbindungsmittel aus Stahl geformt ein. In dieser Ausgestaltung kann eine besonders große Stabilität der Aufnahme realisierbar sein. Dabei kann die Aufnahme ferner trotz der metallischen Ausführung der Verbindungsmittel durch ihre stabförmige Ausgestaltung ein geringes Gewicht aufweisen, da für die Verbindungsmittel nur eine vergleichsweise geringe Menge an Material verwendet werden braucht.

Hinsichtlich weiterer technischer Merkmale und Vorteile der erfindungsgemäßen Aufnahme wird hiermit explizit auf die Erläuterungen im Zusammenhang mit dem erfindungsgemäßen Batteriemodul, den Figuren sowie der Figurenbeschreibung verwiesen.

Gegenstand der vorliegenden Erfindung ist ferner ein Batteriemodul mit wenigstens einer Batteriezelle, insbesondere mit einer Mehrzahl an Batteriezellen, wobei das Batteriemodul wenigstens eine wie vorstehend beschrieben ausgestaltete Aufnahme zum Aufnehmen der wenigstens einen Batteriezelle aufweist.

Zusammenfassend erlaubt es ein vorstehend beschriebenes Batteriemodul auf besonders einfache und kostengünstige Weise, Batteriezellen zu fixieren und durch eine zumindest temporäre Verspannung die Leistungsfähigkeit der Batteriezellen und damit des Batteriemoduls temperaturunabhängig aufrechtzuerhalten.

Im Rahmen einer Ausgestaltung kann wenigstens ein Temperierelement vorgesehen sein, das mit den Buchsen wenigstens einer Endplatte, vorzugsweise wenigstens zweier Endplatten, fluchtend angeordnete Buchsen aufweisen kann, wobei die Steckmittel wenigstens eines Verbindungsmittels durch die Buchsen des Temperierelements führen. In dieser Ausgestaltung kann zusätzlich zu den Batteriezellen ein Temperierelement durch die entsprechenden Verbindungsmittel fixiert werden, was den Aufbau des Batteriemoduls weiter vereinfacht und damit die Herstellung besonders einfach und kostengünstig ermöglichen kann. Alternativ kann es vorgesehen sein, dass wenigstens ein Temperierelement als Verbindungsmittel dient. In dieser Ausgestaltung weist das Temperierelement somit als Verbindungsmittel wenigstens zwei Steckelemente auf, welche in die Buchsen der Endplatten geführt werden können. In anderen Worten kann das Verbindungsmittel als Temperierelement ausgestaltet sein und beispielsweise eine plattenartige Form mit in der plattenartigen Form angeordneten Temperiermittelkanälen aufweisen.

Hinsichtlich weiterer technischer Merkmale und Vorteile des erfindungsgemäßen Batteriemoduls wird hiermit explizit auf die Erläuterungen im Zusammenhang mit der erfindungsgemäßen Aufnahme, den Figuren sowie der Figurenbeschreibung verwiesen.

### Zeichnungen

Weitere Vorteile und vorteilhafte Ausgestaltungen der erfindungsgemäßen Gegenstände werden durch die Zeichnungen veranschaulicht und in der nachfolgenden Beschreibung erläutert, wobei die beschriebenen Merkmale einzeln oder in einer beliebigen Kombination ein Gegenstand der vorliegenden Erfindung sein können, insoweit sich aus dem Kontext nicht eindeutig das Gegenteil ergibt. Dabei ist zu beachten, dass die Zeichnungen nur beschreibenden Charakter haben und nicht dazu gedacht sind, die Erfindung in irgendeiner Form einzuschränken. Es zeigen
- Fig. 1: eine schematische Ansicht einer Endplatte für eine Aufnahme gemäß der Erfindung von schräg vorne;
- Fig. 2: eine schematische Ansicht der Endplatte aus Figur 1 von schräg hinten;
- Fig. 3: eine schematische Ansicht eines Verbindungsmittels für eine Aufnahme gemäß der Erfindung von der Seite;
- Fig. 4: eine schematische Darstellung einer Ausgestaltung einer Aufnahme gemäß der Erfindung;
- Fig. 5: eine schematische Darstellung einer weiteren Ausgestaltung einer Aufnahme gemäß der Erfindung; und
- Fig. 6: eine schematische Ansicht eines Temperierelements für eine Aufnahme gemäß der Erfindung von schräg oben.

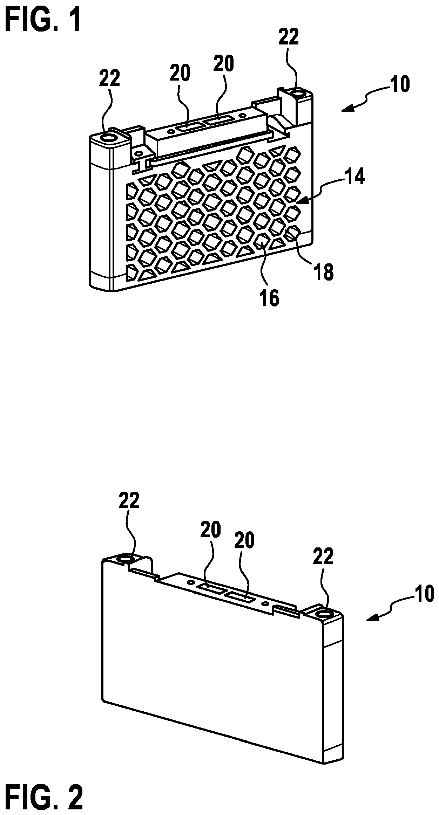

In den Figuren 1 und 2 ist eine Endplatte 10 gezeigt, welche zusammen mit einer beispielsweise baugleichen zweiten Endplatte 10 dazu dienen kann, zumindest eine Batteriezelle 12, insbesondere eine Mehrzahl an Batteriezellen 12, zumindest teilweise zu verpressen, wie dies nachstehend im Detail beschrieben ist. Hierzu ist eine Batteriezelle 12 oder ist die Mehrzahl an Batteriezellen 12 insbesondere zwischen den Endplatten 10 anordbar.

Die Endplatte 10 kann beispielsweise aus einem Kunststoff und in nicht beschränkender Weise als Spritzgussteil ausgestaltet sein. Bezüglich der Endplatten 10 ist in den Figuren 1 und 2 ferner gezeigt, dass diese zumindest teilweise eine bienenwabenartige Struktur 14 aufweisen. Dabei kann die Struktur 14 etwa geformt sein durch hexagonale Ausnehmungen 16, die an ihren Umrahmungen beziehungsweise Rahmen 18 benachbart angeordnet sind, um so ein Bienenwabenmuster zu ergeben, welches sich im Wesentlichen über die gesamte Oberfläche erstrecken kann.

Weiterhin kann die auch als Adapterplatte bezeichnete Endplatte 10 Ausnehmungen 20 aufweisen, um mit einem geeigneten Werkzeug die Aufnahme 10 beziehungsweise das fertiggestellte Batteriemodul in der Fertigung oder bei einer Reparatur greifen und handhaben zu können.

In den Figuren 1 und 2 ist ferner gezeigt, dass die Endplatte 10 zwei Buchsen 22 aufweist, die etwa aus einem metallischen Material geformt sind und welche die Endplatte 10 vollständig durchlaufen. Die Buchsen 22 können beispielsweise in die Endplatte 10 eingespritzt oder eingepresst sein.

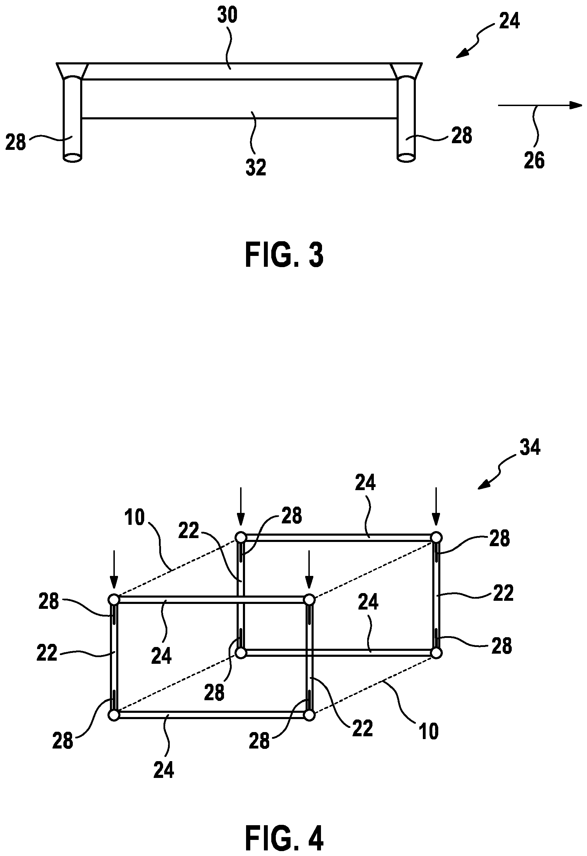

In der Figur 3 ist ein Verbindungsmittel 24 gezeigt, welches dazu dienen kann, beispielsweise zwei Endplatten 10 miteinander zu verbinden. Das Verbindungsmittel 24 ist stabförmig ausgestaltet und weist zwei im Wesentlichen senkrecht zu seiner Erstreckungsrichtung, welche durch den Pfeil 26 dargestellt werden soll, angeordnete Steckelemente 28 auf. Die Steckelemente 28 dienen insbesondere dazu, zum Fixieren der Endplatten 10 in die Buchsen 22 dieser eingreifen zu können, wie dies nachstehend beschrieben ist. Das Verbindungsmittel 24 kann beispielsweise aus einem metallischen Material geformt sein.

Weiterhin kann es vorgesehen sein, dass das Verbindungsmittel 24 zwei zueinander im Wesentlichen rechtwinklig angeordnete Schenkel 30, 32 aufweist, um die wenigstens eine Batteriezelle 12 in einem fertiggestellten Modul sicher fixieren zu können. Dadurch kann gemeinsam mit den Endplatten 10 eine dreidimensionale Fixierung der Batteriezellen 12 ermöglicht werden.

In der Figur 4 ist rein schematisch eine Aufnahme 34 zum zumindest teilweise verpressenden Aufnehmen wenigstens einer Batteriezelle 12 für ein Batteriemodul gezeigt, welche wenigstens zwei der Endplatten 10 aufweist, die an zwei gegenüberliegenden Seiten wenigstens einer Batteriezelle 12 anordbar sind. Die Endplatten 10 sind in der Figur 4 nur rein schematisch gezeigt, wobei insbesondere die Buchsen 22 zu erkennen sind. Gemäß Figur 4 ist gezeigt, dass die Endplatten 10 durch insgesamt vier an den Endplatten 10 fixierte stabartige Verbindungsmittel 24 derart verbunden sind, dass die jeweiligen Steckelemente 28 der Verbindungsmittel 24 zum Fixieren der Verbindungsmittel 24 an den Endplatten 10 in die Buchsen 22 eingreifen. Dabei ist gezeigt, dass die Buchsen 22 im Wesentlichen rechtwinklig zu der Erstreckungsrichtung der Verbindungsmittel 24 ausgerichtet sind, wobei die Buchsen 22 ferner von einem Kopfbereich zu einem Bodenbereich der Endplatten 10 und damit in einem fertig gestellten Batteriemodul von einem Kopfbereich zu einem Bodenbereich der Batteriezellen 12 verlaufen.

Zum Herstellen der Aufnahme brauchen die Verbindungsmittel 24 beziehungsweise deren Steckelemente 28 lediglich in die Endplatten 10 beziehungsweise deren Buchsen 22 geschoben beziehungsweise eingesteckt werden, wie dies durch die Pfeile in Figur 4 angedeutet werden soll. Es ist somit ersichtlich, dass die Batteriezellen 12 auf einfache Weise sicher in der Aufnahme gehalten werden können.

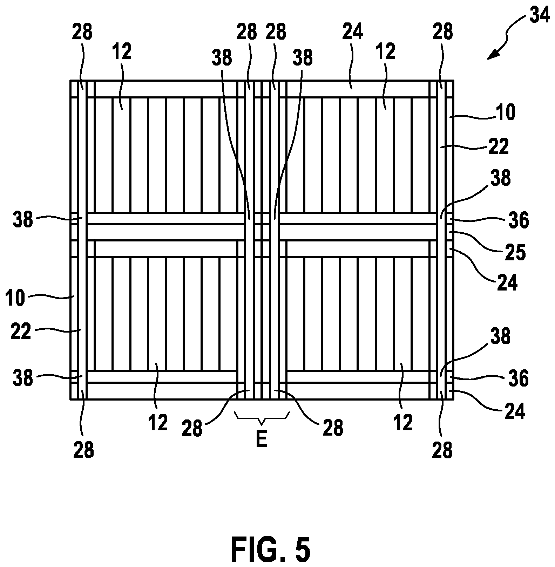

In der Figur 5 ist eine weitere Ausgestaltung einer Aufnahme 34 gezeigt, wobei in der Figur 5 bereits in der Aufnahme 34 angeordnete Batteriezellen 12 gezeigt sind. In der Figur 5 ist dabei eine Ausgestaltung dargestellt, bei der paarweise angeordnete Endplatten 10 vorgesehen sind, die teilweise mit fluchtend angeordneten Buchsen 22 übereinander positioniert sind. Weiterhin ist in der Figur 5 gezeigt, dass paarweise angeordnete Endplatten 10 vorgesehen sind, die teilweise mit parallel angeordneten Buchsen 22 nebeneinander positioniert sind. Dadurch lässt sich auf einfache Weise eine Aufnahme 34 schaffen, welche für eine Vielzahl von Batteriemodulen geeignet ist. Im Detail können durch die in Figur 5 gezeigte Aufnahme insgesamt vier Module aufgenommen werden, wobei sich eine derartige Ausgestaltung durchaus in der Höhe und/oder Breite und/oder Tiefe insbesondere durch das Vorsehen weiterer paarweise angeordneter Endplatten 10 erweitern lässt.

Dabei zeigt Figur 5 ferner, dass die Steckelemente 28 zumindest teilweise beispielsweise mit einer derartigen Länge ausgebildet sein können, dass diese etwa in zwei Hülsen 22 unterschiedlicher Endplatten 10 positioniert sein können. In dieser Ausgestaltung können beispielsweise zwischen zwei übereinander positionierten Modulen anstatt weiterer Verbindungsmittel 24 lediglich Trennelemente 25 vorgesehen sein, welche die Batteriezellen 12 fixieren jedoch keine Steckelemente 28 aufweisen brauchen, sondern lediglich eine Öffnung zum Durchführen der Steckelemente 28 oder eines Steckelements 28 aufweisen brauchen. In der Ausgestaltung aus Figur 5 kann beispielsweise ein jeweiliges Steckelement 28 eines oberen Verbindungsmittels 24 eine obere Endplatte 10 durchlaufen und in die untere Endplatte 10 beziehungsweise deren Buchse 22 reichen, wohingegen ein Steckelement 28 des unteren Verbindungsmittels nur in die untere Endplatte 10 beziehungsweise deren Buchse 22 reichen braucht, oder umgekehrt. Die einzelnen Module können ferner durch Fixierungsmittel aneinander fixiert sein.

Weiterhin kann der in Figur 5 mit E gekennzeichnete Bereich eine Endplatte 10 umfassen, wenn beispielsweise ein Verbindungsmittel 24 mit drei Steckelementen 28 vorgesehen ist. Alternativ können zwei separate Endplatten 10 Verwendung finden.

Ferner ist gezeigt, dass Temperierelemente 36 vorgesehen sind, die mit den Buchsen 22 der Endplatten 10 fluchtend angeordnete Buchsen 38 aufweisen können, wobei die Steckmittel 28 wenigstens eines Verbindungsmittels 24 durch die Buchsen 38 des Temperierelements 36 führen. In dieser Ausgestaltung ist ein besonders einfaches Fixieren von Temperierelementen 34 in der vorbeschriebenen Aufnahme 34 möglich. Alternativ können die Temperierelemente 34 auf andere Weise etwa an den Batteriezellen 12 fixiert sein.

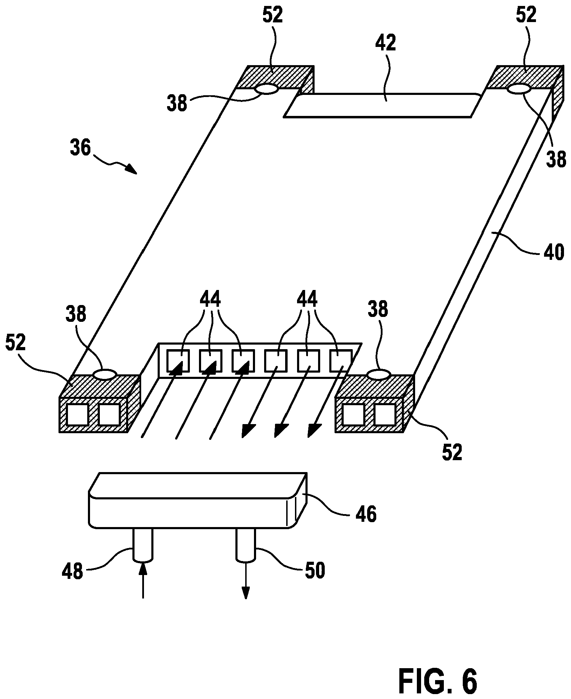

Ein Temperierelement 36 zur Verwendung in einer vorbeschriebenen Aufnahme 34 ist in der Figur 6 gezeigt. Das Temperierelement 36 ist insbesondere mit einem plattenförmigen Grundkörper 40 ausgestaltet, der etwa aus beispielsweise extrudiertem Aluminium geformt sein kann. Es kann optional ein isolierendes Material, wie etwa eine Kunststoffhülle, vorliegen, um den Grundkörper 40 von den Batteriezellen 12 elektrisch zu isolieren. Der Grundkörper 40 weist eine Struktur zum Führen eines Temperiermittels, wie etwa eines Kühlmittels, auf, wie dies durch die Pfeile dargestellt sein soll. Dabei kann die Temperiermittelstruktur im Wesentlichen parallele Kanäle 44 aufweisen, wobei ein beispielsweise u-förmiges Umleiten etwa durch ein Verschlussmittel 42, beispielsweise aus einem Kunststoff, realisiert werden kann. Ferner kann ein weiteres Verschlussmittel 46, beispielsweise aus einem Kunststoff, einen Eingang 48 und einen Ausgang 50 zum Einleiten beziehungsweise zum Ausleiten des Temperiermittels aufweisen. In der Figur 6 sind weiterhin die Buchsen 38 zu erkennen, welche die Steckmittel 28 aufnehmen können, wie dies vorstehend beschrieben ist. Alternativ kann es vorgesehen sein, dass das Temperierelement als Verbindungsmittel 24 fungieren kann und anstatt der Buchsen 38 Steckmittel 28 aufweist, um an den Endplatten 10 fixiert zu werden beziehungsweise um die Endplatten 10 aneinander zu fixieren.

Darüber hinaus sind Knautschzonen 52 angedeutet, welche an den vier Ecken des Grundkörpers 40 vorgesehen sein können und welche ein Austreten von Temperiermittel bei einem Schadenfall reduzieren können.

## Patentansprüche

1. Aufnahme (34) zum zumindest teilweise verpressenden Aufnehmen wenigstens einer Batteriezelle (12) für ein Batteriemodul, wobei die Aufnahme (34) wenigstens zwei Endplatten (10) aufweist, die an zwei gegenüberliegenden Seiten der wenigstens einen Batteriezelle (12) anordenbar sind, wobei
die Endplatten (10) durch eine Mehrzahl an den Endplatten (10) fixierte jeweils wenigstens zwei Steckelemente (28) aufweisende Verbindungsmittel (24) derart verbunden sind, dass
die Steckelemente (28) der Verbindungsmittel (24) zum Fixieren der Verbindungsmittel (24) an den Endplatten (10) in einer im Wesentlichen rechtwinklig zu der Erstreckungsrichtung der Verbindungsmittel (24) angeordneten Ebene verlaufende Buchsen (22) der Endplatten (10) eingreifen, wobei die Verbindungsmittel (24) einteilig ausgebildet sind,
**dadurch gekennzeichnet, dass**
die Buchsen (22) die Endplatten (10) vollständig durchlaufen.

2. Aufnahme (34) nach Anspruch 1,
**dadurch gekennzeichnet, dass**
wenigstens vier paarweise angeordnete Endplatten (10) vorgesehen sind, von denen jeweils zwei mit fluchtend angeordneten Buchsen (22) übereinander positioniert sind.

3. Aufnahme (34) nach einem der Ansprüche 1 bis 2,
**dadurch gekennzeichnet, dass**
wenigstens vier paarweise angeordnete Endplatten (10) vorgesehen sind, von denen jeweils zwei mit parallel angeordneten Buchsen (22) nebeneinander positioniert sind.

4. Aufnahme (34) nach einem der Ansprüche 1 bis 3,
**dadurch gekennzeichnet, dass**
die Buchsen (22) aus einem metallischen Material geformt sind.

5. Aufnahme (34) nach einem der Ansprüche 1 bis 4,
**dadurch gekennzeichnet, dass**
die Endplatten (10) aus einem Kunststoff geformt sind.

6. Aufnahme (34) nach einem der Ansprüche 1 bis 5,
**dadurch gekennzeichnet, dass**
die Endplatten (10) zumindest teilweise eine bienenwabenartige Struktur (14) aufweisen.

7. Aufnahme (34) nach einem der Ansprüche 1 bis 6,
**dadurch gekennzeichnet, dass**
die Verbindungsmittel (24) aus einem metallischen Material geformt sind.

8. Batteriemodul mit wenigstens einer Batteriezelle (12),
**dadurch gekennzeichnet, dass**
das Batteriemodul wenigstens eine Aufnahme (34) nach einem der Ansprüche 1 bis 7 aufweist zum Aufnehmen der wenigstens einen Batteriezelle (12).

9. Batteriemodul nach Anspruch 8,
**dadurch gekennzeichnet, dass**
wenigstens ein Temperierelement (36) vorgesehen ist, wobei das Temperierelement (36) mit den Buchsen (22) wenigstens einer Endplatte (10) fluchtend angeordnete Buchsen (38) aufweist, wobei die Steckelement (28) wenigstens eines Verbindungsmittels (24) durch die Buchsen (38) des Temperierelements (36) führen, oder wobei wenigstens ein Temperierelement (36) als Verbindungsmittel (24) dient.

## Claims

1. Receptacle (34) for the at least partial press-fitting reception of at least one battery cell (12) for a battery module, wherein
the receptacle (34) has at least two end plates (10) which can be arranged on two opposite sides of the at least one battery cell (12), wherein
the end plates (10) are connected by a plurality of connecting means (24), which are fixed to the end plates (10) and which each have at least two plug elements (28), in such a way that
for fixing the connecting means (24) to the end plates (10), the plug elements (28) of the connecting means (24) engage in sockets (22) of the end plates (10) that extend in a plane arranged substantially at a right angle to the direction of extent of the connecting means (24), wherein the connecting means (24) are formed in one piece,
**characterized in that**
the sockets (22) pass completely through the end plates (10).

2. Receptacle (34) according to Claim 1,
**characterized in that**
at least four end plates (10) arranged in pairs are provided, of which in each case two are positioned above one another with sockets (22) arranged in alignment.

3. Receptacle (34) according to either of Claims 1 and 2,
**characterized in that**
at least four end plates (10) arranged in pairs are provided, of which in each case two are positioned next to one another with sockets (22) arranged in parallel.

4. Receptacle (34) according to one of Claims 1 to 3,
**characterized in that**
the sockets (22) are formed from a metallic material.

5. Receptacle (34) according to one of Claims 1 to 4,
**characterized in that**
the end plates (10) are formed from a plastic.

6. Receptacle (34) according to one of Claims 1 to 5,
**characterized in that**
the end plates (10) at last partially have a honeycomb-like structure (14).

7. Receptacle (34) according to one of Claims 1 to 6,
**characterized in that**
the connecting means (24) are formed from a metallic material.

8. Battery module having at least one battery cell (12),
**characterized in that**
the battery module has at least one receptacle (34) according to one of Claims 1 to 7 for receiving the at least one battery cell (12).

9. Battery module according to Claim 8,
**characterized in that**
at least one temperature-control element (36) is provided, wherein the temperature-control element (36) has sockets (38) arranged in alignment with the sockets (22) of at least one end plate (10), wherein
the plug elements (28) of at least one connecting means (24) lead through the sockets (38) of the temperature-control element (36), or wherein at least one temperature-control element (36) serves as connecting means (24).

## Revendications

1. Logement (34) destiné à accueillir avec compression au moins partielle au moins une cellule de batterie (12) pour un module de batterie,
le logement (34) possédant au moins deux plaques terminales (10) qui peuvent être disposées au niveau de deux côtés opposés de l'au moins une cellule de batterie (12),
les plaques terminales (10) étant reliées par une pluralité de moyens d'assemblage (24), immobilisés contre les plaques terminales (10) et possédant respectivement au moins deux éléments d'enfichage (28), de telle sorte que
les éléments d'enfichage (28) des moyens d'assemblage (24), en vue d'immobiliser les moyens d'assemblage (24) contre les plaques terminales (10), viennent en prise dans des douilles (22) des plaques terminales (10), s'étendant dans un plan disposé sensiblement perpendiculairement à la direction d'extension des moyens d'assemblage (24),
les moyens d'assemblage (24) étant réalisés d'un seul tenant,
**caractérisé en ce que**
les douilles (22) traversent entièrement les plaques terminales (10).

2. Logement (34) selon la revendication 1, **caractérisé en ce qu'**au moins quatre plaques terminales (10) disposées par paires sont présentes, parmi lesquelles deux ayant des douilles (22) disposées de manière affleurante sont respectivement positionnées l'une au-dessus de l'autre.

3. Logement (34) selon l'une des revendications 1 à 2, **caractérisé en ce qu'**au moins quatre plaques terminales (10) disposées par paires sont présentes, parmi lesquelles deux ayant des douilles (22) disposées en parallèle sont respectivement positionnées l'une à côté de l'autre.

4. Logement (34) selon l'une des revendications 1 à 3, **caractérisé en ce que** les douilles (22) sont façonnées à partir d'un matériau métallique.

5. Logement (34) selon l'une des revendications 1 à 4, **caractérisé en ce que** les plaques terminales (10) sont façonnées à partir d'une matière plastique.

6. Logement (34) selon l'une des revendications 1 à 5, **caractérisé en ce que** les plaques terminales (10) possèdent au moins partiellement une structure (14) de type alvéolaire.

7. Logement (34) selon l'une des revendications 1 à 6, **caractérisé en ce que** les moyens d'assemblage (24) sont façonnés à partir d'un matériau métallique.

8. Module de batterie comprenant au moins une cellule de batterie (12),
**caractérisé en ce que**
le module de batterie possède au moins un logement (34) selon l'une des revendications 1 à 7 destiné à accueillir l'au moins une cellule de batterie (12).

9. Module de batterie selon la revendication 8, **caractérisé en ce que**
au moins un élément d'équilibrage thermique (36) est présent, l'élément d'équilibrage thermique (36) possédant des douilles (38) disposées de manière affleurante avec les douilles (22) d'au moins une plaque terminale (10),
les éléments d'enfichage (28) guidant au moins un moyen d'assemblage (24) à travers les douilles (38) de l'élément d'équilibrage thermique (36) ou
au moins un élément d'équilibrage thermique (36) servant de moyen d'assemblage (24).
